# EUROPEAN PATENT APPLICATION

(11) **EP 1 788 280 A2**
(43) Date of publication of application: **23.05.2007**
(21) Application number: 06024199.9
(22) Date of filing: 22.11.2006
(51) Int. Cl.: F16G 13/02, F16G 5/18

(54) **Power transmission chain and power transmission having the same**

(30) Priority: 22.11.2005 JP 2005337442
(71) Applicant: JTEKT Corporation, Osaka-shi Osaka 542-8502 (JP)
(72) Inventor: Kuster, Joel Jtekt Corporation, Osaka-shi Osaka 542-8502 (JP); Kamamoto, Shigeo Jtekt Corporation, Osaka-shi Osaka 542-8502 (JP)
(74) Representative: Hager, Thomas Johannes

(57) **Abstract**

A chain includes a plurality of links (2) arranged in the chain-running direction and a plurality of connecting members (200) connecting the links (2). A substantial plane strain state is applied to the stress field in the links created when the chain looped around pulleys is driven.

## Description

### BACKGROUND OF THE INVENTION

The present invention relates to a power transmission chain and a power transmission having the same.

According to conventional endless power transmission chains used for a power transmission, such as pulley type CVT (Continuously Variable Transmission) for vehicles, a plurality of rows of links arranged in the width direction of the chain is arranged in the running direction of the chain and links in adjacent rows of link are connected by pins (e.g. see Patent Document 1 and 2).
Patent Document 1: JP-A-2-195045
Patent Document 2: JP-A-5-133442

### SUMMARY OF THE INVENTION

Such power transmission chains are required to improve allowable transmission torque and durability. An object of the invention is to overcome the problems.

As a result of researches by the inventor(s), it is found that allowable transmission torque and durability can be improved by optimizing stress state of links at the time a power transmission chain is driven. In detail, links are generally formed by applying press forming to thin metal plates, such as steel plate and has small thickness. Accordingly, while a power transmission chain looped around pulleys is driven, tension in the running direction of the chain is applied to the links through pins and plane stress state is created. When the link is under plane stress state, Tresca or Mises stress in the links increases and intend to easily reach a yield point. Accordingly, it is limited to improve allowable transmission torque and durability.
In order to solve the above problem, the present invention is characterized by having the following arrangement.
(1) A power transmission chain comprising:
   a plurality of links arranged in a chain-running direction; and
   a plurality of connecting members extending in the chain width direction and connecting the links,
   wherein a substantial plane strain state is applied to stress field in the links that is created when the chain looped around pulleys is driven.
(2) The power transmission chain according to (1), wherein
   the link has through holes to insert the connecting members, and
   a ratio of thickness of the link in a chain width direction to a length of the through hole in a direction perpendicular to the chain-running direction and the chain width direction is set in a range of 2/15 to 5/15.
(3) The power transmission chain according to (1), wherein
   the connecting member includes a power transmission member having a pair of engaging regions that engages with the pulleys to transmit power at opposite ends of the connecting member in the chain width direction, and
   a ratio of thickness of the link to a distance between center points of the pair of engaging regions is set in the range of 1/30 to 3/30.
(4) The power transmission chain according to (1), wherein
   the link includes a first through hole and a second through hole which are disposed in a line in the chain-running direction and through the connecting members are respectively inserted,
   the connecting member includes a first power transmission member that is engaged with the pulleys to transmit power and a second power transmission member that rolls to come in sliding contact with the first power transmission member,
   the first power transmission member is inserted in the first through hole such that the first power transmission member can move relatively to the through hole and the second power transmission member is inserted in the first through hole such that the second power transmission member can not move relative to the through hole, and
   the first power transmission member is inserted in the second through hole such that the first power transmission member cannot move relatively to the through hole and the second power transmission member is inserted in the second through hole such that the second power transmission member can move relative to the through hole.
(5) A power transmission comprising:
   first and second pulleys respectively having a pair of conical sheave surfaces facing each other, and
   the power transmission chain according to any one of (1) to (4) that is looped around the pulleys and engaged with the sheave surfaces to transmit power.

### BRIEF DESCRIPTION OF THE DRAWINGS

FIG. 1 is a schematic perspective view showing the configuration of main parts of a chain-typed continuous variable transmission having a power transmission chain according to an embodiment of the invention.
FIG. 2 is a partial expanded cross-sectional view of a drive pulley (driven pulley) and a chain of FIG. 1.
FIG. 3 is a cross-sectional view of main parts of a chain.
FIG. 4A is a cross-sectional view taken along the line IVA-IVA of FIG. 3.
FIG. 4B is a view of a cross section of a first pin seen from the width direction of a chain.
FIG. 5 is a cross-sectional view of main parts according to another embodiment of the invention.
FIG. 6 is a cross-sectional view of main parts according to another embodiment of the invention.
FIG. 7 is a cross-sectional view taken along the line VII-VII of FIG. 6.
FIG. 8 is a graph illustrating samples.

### DETAILED DESCRIPTION OF PREFERRED EMBODIMENTS

The present invention provides a power transmission chain 1 that includes a plurality of links 2(2B) arranged in the chain-running direction X, and a plurality of connecting members 200(3) extending in the chain width direction and connecting the links 2(2B), in which plane strain state is applied to stress field in the links that is created while the chain looped around pulleys 60 and 70 is driven.

According to another aspect of the invention, while a power transmission chain 1 is driven, force corresponding to hydrostatic pressure, which does not contribute to the plastic deformation of the links in force acting in the links, may be increased by substantially applying plane strain state to the stress field in the links. As a result, it is possible to decrease the force contributing to the plastic deformation of the links, such as Tresca stress or Mises stress. Accordingly, load applied to the links may be substantially reduced and torque transmission capacity of the link can be improved, so that improved durability and allowable transmission torque can be achieved in the chain.

According to another aspect of the invention, the link 2(2B) has through holes 9, 10, 9B, and 10B to insert the connecting members 200(3), and the ratio of the thickness L3 of the link 2 and 2B in the chain width direction W to the length L1(L1B) and L2 of the through hole 9(9B) and 10(10B) in a direction V, which is perpendicular to the chain-running direction X and the chain width direction W, may be set in the range of 2/15 to 5/15. According to the above configuration, by setting 2/15 or more to the ratio, the thickness of the link can be sufficiently ensured. As a result, plane strain state may be substantially applied to the stress field in the link created when the power transmission chain is driven. Alternatively, by setting 5/15 or less to the ratio, it is possible to maintain the radius thickness of the link not too much, and prevent restriction on flexibility in arranging the links.

According to another aspect of the invention, the connecting member 200(3) may include a power transmission member 3 having a pair of engaging regions 24 that engages with the pulleys 60 and 70 to transmit power at a pair of ends 16 in the chain width direction W and the ratio of the thickness L3 of the link to a distance L4 between the center points C of the engaging region 24 may be set in the range of 1/30 to 3/30. According to the above configuration, the thickness of the link 2(28) may be sufficiently ensured by setting 1/30 or more to the ratio, and plane strain state may be substantially applied to stress field in the link created when the power transmission chain is driven accordingly. Further, when the ratio is 3/30 or less, it is possible to maintain the thickness not too much, and prevent restriction on the flexibility in arranging of the link.

According to another aspect the invention, the link 2 has a first through hole 9 and a second through hole 10 disposed in a line in the chain-running direction X to insert the connecting members 200(3), the connecting member 200(3) includes a first power transmission member 3 that is engaged with the pulleys 60 and 70 to transmit power and a second power transmission member 4 that rolls to come in sliding contact with the first power transmission member 3. The first power transmission member 3 is inserted in the first through hole 9 such that the first power transmission member 3 can move relatively to the through hole 9 and the second power transmission member 4 is inserted in the first through hole 9 such that the second power transmission member 4 can not move relative to the through hole 9, and the first power transmission member 3 is inserted in the second through hole 10 such that the first power transmission member 3 can not move relatively to the through hole 10 and the second power transmission member 4 is inserted in the second through hole 10 such that the second power transmission member 4 can move relative to the through hole 10.

A pair of engaging regions of the first power transmission member is engaged with corresponding pulleys, and as adjacent links bend in the chain-running direction, a corresponding second power transmission member rolls to come in sliding contact with the first power transmission member and the links can bend. Between the first and second power transmission members, rolling-sliding contact components are large and sliding components is little, so that the engaging regions of the first power transmission member is in contact with the pulleys, not rotating, thus a friction loss is reduced and high power transmission efficiency can be achieved. Although stress is tend to increase in the engaging portions engaging with the second power transmission member in the periphery of the first through hole and the engaging portions engaging with the first power transmission in the periphery of the second through hole due to force directly applied through corresponding power transmission members, the links are designed such that their stress is reduced, so that stress created in the engaging portions can be reduced.

According to another aspect of the present invention, first and second pulleys 60 and 70 respectively having a pair of conical sheave surfaces 62a, 63a, 72a, and 73a facing each other, and the power transmission chain 1 looped around the pulleys 60 and 70 and engaged with the sheave surfaces 62a, 63a, 72a, and 73a to transmit power may be provided. According to the above configuration, a power transmission having high allowable transmission torque and durability can be achieved.

Preferred embodiments of the invention are described hereafter with reference to the accompanying drawings.

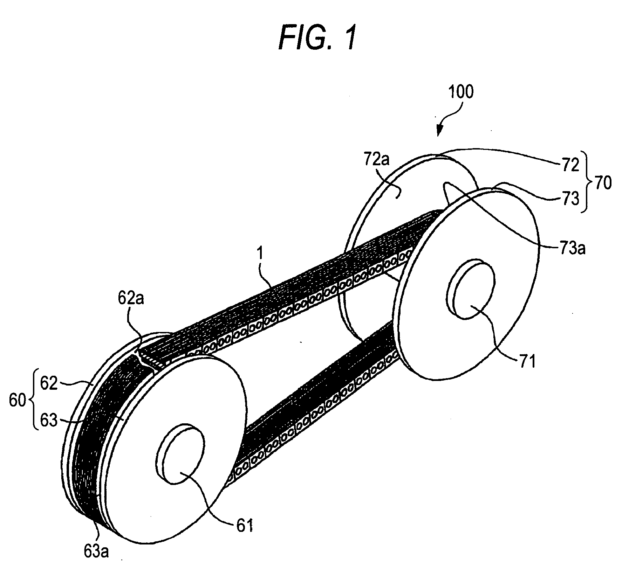

FIG. 1 is a perspective view schematically showing main parts of a chain type continuously variable transmission (hereinafter, called continuously variable transmission) that is a power transmission having a power transmission chain according to an embodiment of the invention. Referring to FIG. 1, a continuously variable transmission 100 is mounted in a vehicle, such as automobiles, and has a first pulley of a metallic drive pulley 60 (structural steel), a second pulley of a metallic driven pulley 70 (structural steel), and an endless power transmission chain 1 (hereinafter, called chain) looped around the pulleys 60 and 70. For the chain 1 of FIG. 1, only a part of cross section is described to help understand.

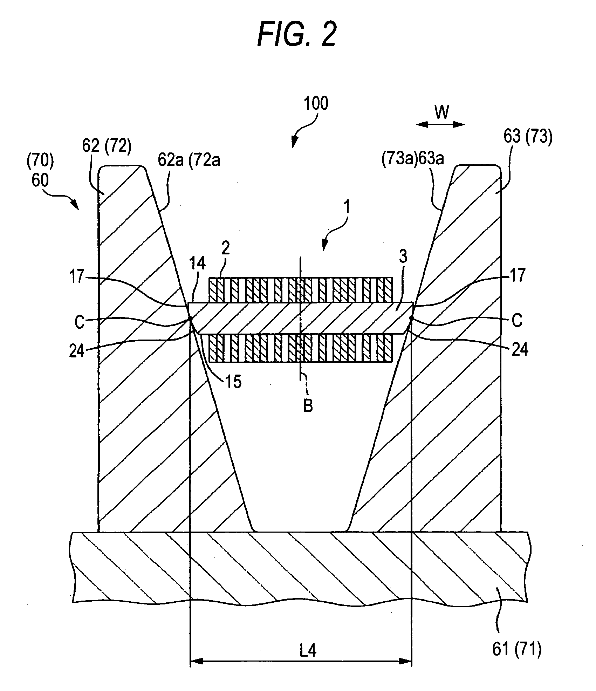

FIG. 2 is a partial expanded cross-sectional view of the drive pulley 60 (driven pulley 70) and the chain 1. Referring to FIGS. 1 and 2, the drive pulley 60 is integrally and rotatably coupled with an input shaft 61 connected to a driving source of a vehicle to transmit power and has a fixed sheave 62 and a movable sheave 63. The fixed sheave 62 and the movable sheave 63 respectively have sheave surfaces 62a and 63a facing each other. Each of the sheave surfaces 62a and 63a has a conical inclination. A groove is formed between the sheave surfaces 62a and 63a and the chain 1 is forcedly held by the groove.

A hydraulic actuator (not shown) for changing the groove width is connected to the movable sheave 63, and it changes the groove width by moving the movable sheave 63 in the axial direction (left and right in FIG. 2) of the input shaft 61, when a vehicle changes speed. As the hydraulic actuator moves the movable sheave 63, the chain 1 moves in the radial direction (up and down in FIG. 2) of the input shaft 61, which changes the effective radius of the pulley 60 with respect to the chain 1 (hereinafter, called effective radius of the pulley 60).

On the other hand, the driven pulley 70 is, as shown in FIGS. 1 and 2, integrally rotatably coupled with an output shaft 71 connected to a driving wheel (not shown) to transmit power and, as the drive pulley 60, has a fixed sheave 73 and a movable sheave 72 respectively having sheave surfaces 73a and 72a facing each other that form a groove to forcedly hold the chain 1.
Similar to the movable sheave 63 of the drive pulley 60, a hydraulic actuator (not shown) is connected to the movable sheave 72, and it changes the groove width by moving the movable sheave 72, when a vehicle changes speed. As the hydraulic actuator moves the movable sheave 72, the chain 1 moves, which changes the effective radius of the pulley 70 with respect to the chain 1 (hereinafter, called effective radius of the pulley 70).

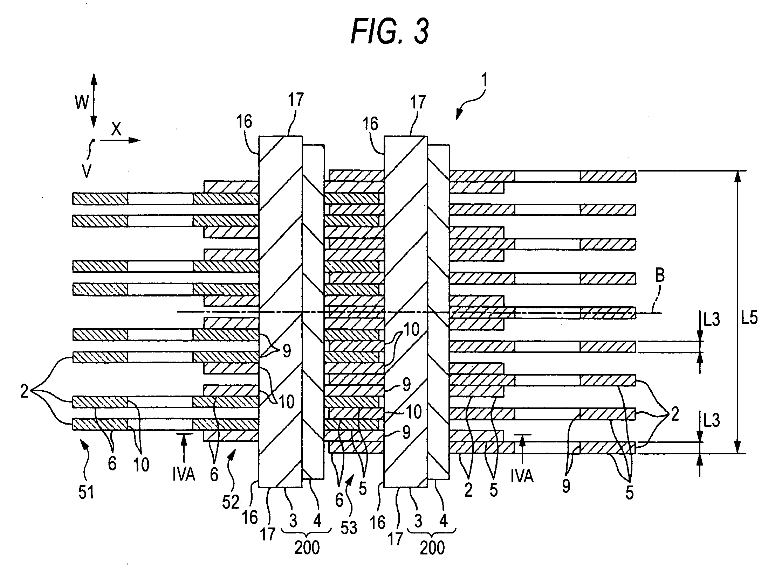

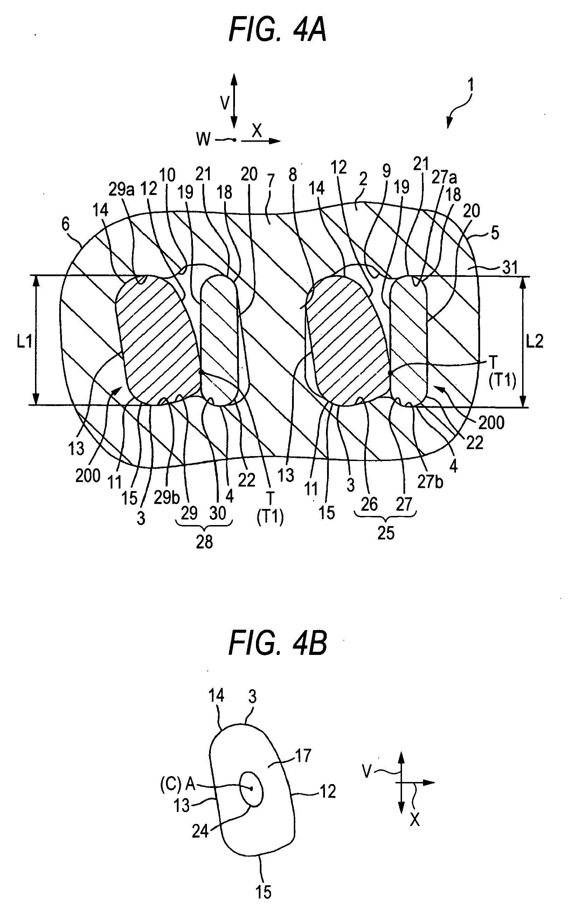

FIG. 3 is a cross-sectional view showing main parts of the chain 1. FIG. 4A is a cross-sectional view taken along the line IVA-IVA of FIG. 3. Referring to FIGS. 3 and 4A, the chain 1 includes a plurality of links 2 and a plurality of connecting members 200 that connect the links 2 and enables them to bend. The running direction of the chain 1 is defined as the chain-running direction X, the direction perpendicular to the chain-running direction X as well as the longitudinal direction of the connecting member 200 is defined as the chain width direction W, and the direction perpendicular to the chain-running direction X and the chain width direction W is defined as the perpendicular direction V hereafter.

Each link 2 is formed by applying press forming to a steel plate and has a pair of ends of a front end 5 and a rear end 6 in a line in the chain-running directions X and a middle portion 7 that is disposed between the front and rear ends 5 and 6.
A front through hole 9 (first through hole) is formed near the front end 5 and a rear through hole 10 (second through hole) is formed near the rear end 6. The middle portion 7 has a pillar section 8 that partitions the front and rear through holes 9 and 10. The pillar section 8 has a predetermined thickness in the chain-running direction X. The periphery of the link 2 is smoothly rounded to prevent stress concentration.

First to third rows of link 51 to 53 are formed by the links 2. In detail, the first row of link 51, the second row of link 52, and the third row of link 53 respectively include a plurality of links 2 in a line in the chain width direction W. In each of the first to third rows of link 51 to 53, links 2 in the same row of link are disposed at the same position in the chain-running direction X. The first to third rows of link 51 to 53 are disposed in a line in the chain-running direction X.

The links 2 in the first to third rows of link 51 to 53 rotatably (bendably) connected with corresponding links 2 in the first to third rows of link 51 to 53, respectively, using corresponding connecting members 200.
In detail, a front through hole 9 of a link 2 in the first row of link 51 and a rear through hole 10 of a link 2 in the second row of link 52 correspond to each other in a line in the chain width direction W. The links 2 in the first and second rows of link 51 and 52 are connected and bendable in the chain-running direction X by connecting members 200 inserted in the through holes 9 and 10.

Similar to the above, a front through hole 9 of a link 2 in the second row of link 52 and a rear through hole 10 of a link 2 in the third row of link 53 correspond to each other in a line in the chain width direction W. The links 2 in the first and third rows of link 52 and 53 are connected and bendable in the chain-running direction X by connecting members inserted in the through holes 9 and 10.
In FIG. 3, although a row for each of the first to third rows of link 51 to 53 is shown, they are repeatedly disposed in the chain-running direction X. Links 2 in two rows of link adjacent to each other in the chain-running direction X are sequentially connected by corresponding connecting members 200 and result in forming the endless chain 1.

Continuing with FIGS. 3 and 4A, each of the connecting members 200 includes a first pin 3 functioning as a first power transmission member and a second pin 4 functioning as a second power transmission member. As the links 2 bend, the first pins 3 rolls to come in sliding contact with corresponding second pins 4. The rolling-sliding contact implies at least one of rolling contact and sliding contact.

The first pin 3 is a long member (plate) extending in the chain width direction W. The peripheral surface 11 of the first pin 3 is smooth and has the front 12, which is a facing portion, facing the front area in the chain-running direction X, the rear 13, which is a rear portion, facing the rear are direction in the chain-running direction X, an end 14 and the other end 15 that face each other in the perpendicular direction V.
The front 12 faces a corresponding second pin 4 and rolls to come in sliding contact with a rear 19 of the second pin at a contacting portion T (a contact point when seen from the chain width direction W, which is described later).

The end 14 is an end of the peripheral surface 11 of the first pin 3 at the outer radial side of the chain (at one side of the perpendicular direction V) and convexly formed toward the outer radius of the chain.
The end 15 is an end of the peripheral surface 11 of the first pin 3 at the inner radial side of the chain (at the other side of the perpendicular direction V) and convexly formed toward the inner radius of the chain.
In the perpendicular direction V, hereafter, a direction from the end 14 to the end 15 is defined as the chain-inner-radius direction, while a direction from the end 15 to the end 14 is defined as the chain-outer-radius direction.

A pair of ends 16 in the longitudinal direction (the chain width direction W) of the first pin 3 protrudes from links 2 disposed at the ends in the chain width direction W. A pair of end surfaces 17 functioning as a part of power transmission is formed at the ends 16.
FIG. 4B is a view showing the end surfaces 17 of a first pin 3 seen from the chain width direction W. Referring to FIGS. 2 and 4B, the end surfaces 17 symmetrically face each other and a virtual plane B that is perpendicular to the chain width direction W is shown between the end surfaces 17. The end surfaces 17 are engaged with the sheave surfaces 62a, 63a, 72a, and 73a of the pulleys 60 and 70 facing each other so that the chain can transmit power.

The first pin 3 interposed between the sheave surfaces 62a, 63a, 72a, and 73a, which allows power to be transmitted between the first pin 3 and the pulleys 60 and 70. The first pin 3 is made of a material with high strength and wear resistance such as steel for bearings (SUJ2), because the end surfaces 17 directly contributes to power transmission.
The end surface 17 of the first pin 3 is a part of sphere and convex to the outside in the chain width direction W. Further, the end 14 of the first pin 13 is longer (large width) than the end 15 in the chain width direction W, which makes the end surfaces 17 inclined in the chain inner radial direction. A tip of the end surface 17 seen from the chain width direction W is positioned at the centroid A of the end surface 17.

The end surface 17 is provided with a contact region 24, i.e. engaging region. In the end surface 17, the contact region 24 contacts with the corresponding sheave surfaces 62a, 63a, 72a, and 73a of the pulleys 60 and 70, which enables power to be transmitted.
The contact region 24, for example, is an ellipse. A contact center point C that is a center point of the contact region 24 agrees with the centroid A of the end surface 17. The position of the contact center point C may not agree with (offset from) the centroid A of the end surface 17.

Returning to FIGS. 3 and 4A, the second pin 4 (also called strip or interpiece) is made of the same material as the first pin 3 and a plate-shaped member extending in the chain width direction W.
A pair of ends of the second pin 4 do not contact with the sheave surfaces of the pulleys, and the second pin 4 is shorter than the first pin 3 and disposed ahead of the first pin 3 in the chain-running direction X. Seen from the chain-running direction X, the second pin 4 is thinner than the first pin 3.

The peripheral surface 18 of the second pin 4 extends in the chain width direction W and is smooth. The second pin 4 has the rear 19 facing the rear area in the chain-running direction X, the front 20 facing the front area in the chain-running direction X, and an end 21 and the other end 22 in the perpendicular direction V.
The rear 19 is a flat surface perpendicular to the chain-running direction X. As described above, the rear 19 faces the front 12 of a corresponding first pin 3 to it.

The end 21 of the peripheral surface 18 of the second pin 4 is an end at the outer radius side of the chain and convexly formed to the outer radius side of the chain.
The end 22 of the peripheral surface 18 of the second pin 4 is an end at the inner radius side of the chain and convexly formed to the inner radius side of the chain.
The chain 1 is a press-fitting type chain. In detail, the first pin 3 is loosely inserted in the front through hole 9 of each link 2 such that it can move relatively to the hole 9 and press-fitted in the rear through hole 10 of each link 2 such that it cannot move relatively to the hole 10. On the other hand, the second pin 4 is press-fitted in the front through hole 9 of each link 2 such that it cannot move relatively to the hole 9 and loosely inserted in the rear through hole 10 of each link 2 such that it can move relatively to the hole 10.

In other words, in the front hole 9 of each link 2, while a first pin 3 is loosely inserted such that it can move, a second pin 4 corresponding to the first pin 3 is press-fitted such that it cannot move. Further, in the rear hole 10 of each link 2, while a first pin 3 is press-fitted such that it cannot move, a second pin 4 corresponding to the first pin 3 is loosely inserted such that it can move.

According to the above configuration, as two links adjacent in the chain-running direction X bend, the fronts 12 of the first pins 3 and the rears 19 of the second pins 4 rolls to come in sliding contact with each other. The peripheral surface 25 of the front through hole 9 includes a first portion 26 partially surrounding the first pin 3 and a second portion 27 partially surrounding the second pin 4. In the second portion 27, an end 27a and the other end 27b in the perpendicular direction V respectively come in press-contact with corresponding ends 21 and 22 of the second pin 4, and the press-fitting of the second pin 4 in the front through hole 9 is achieved accordingly.

The periphery 28 of the rear through hole 10 includes a first portion 29 partially surrounding the first pin 3 and a second portion 30 partially surrounding the second pin 4. In the first portion 29, an end 29a and the other end 29b in the perpendicular direction V respectively come in press-contact with corresponding ends 14 and 15 of the first pin 3 and the press-fitting of the second pin 4 in the rear through hole 10 correspondingly achieved.

The length L2 of the front through hole 9 between the end 27a and the other end 27b of the second portion 27 in the perpendicular direction V is the same as the length L1 of the rear through hole 10 between the end 29a and the other end 29b of the first portion in the perpendicular direction V (L2=L1).
Seen from the chain width direction W, points of the front 12 contacting with the rear 19 of the second pin 4 construct an involute curve. Accordingly, as adjacent links 2 bend, the first and second pins 3 and 4 can smoothly roll and contact with each other and smooth bending of adjacent links 2 can be achieved.

Alternatively, seen from the chain width direction W, the shape of the front 12 of the first pin 3 may be involute curve or other curves (e.g. curves having one or a plurality of radius of curvatures).
A point to intend to characterize the invention through the present embodiment is to substantially apply plane strain state to stress field in the links 2 that is created when the chain 1 looped to the pulleys is driven a by sufficiently ensuring the thickness L3 (hereinafter, means the thickness L3 of the link 2) of the links 2 in the chain width direction W.

The plane strain state implies the stress condition at a cross section 31 perpendicular to the chain width direction W in the links 2, in more detail, that distortion does not substantially appear in the chain width direction W when force is applied to the cross section 31 in a direction perpendicular to the chain width direction W. Therefore, when tension is applied to the links 2 from the connecting members 200, distortion does not substantially appear in the links 2 in the chain width direction W.

The thickness L3 of the link 2 is set to satisfy the following conditions. The ratio of the thickness L3 of the link 2 to a through hole length of the link 2 in the perpendicular direction V ranges from 2/15 to 5/15.
The above length of through hole length of the link 2 is the length L2 of the front through hole 9 (the length L1 of the rear through hole 10).

By setting 2/15 or more to the ratio L3/L2 of the thickness L3 of the link 2 to the length L2 of the front through hole 9, the thickness of the link 2 can be sufficiently ensured. As a result, plane strain state can be substantially applied to the stress field in the link 2 created when the chain 1 is driven.
Alternatively, by setting 5/15 or less to the ratio L3/L2 of the thickness L3 of the link 2 to the length L2 of the front through hole 9, it is possible to maintain the radius thickness of the link 2 not too much, and prevent restriction on flexibility in arranging the links 2.

As for the present embodiment, the length L2 of the front through hole 9 is about 6 mm, the thickness L3 of the link 2 is 0.8 mm. Accordingly, the ratio L3/L2 = 0.8/0.6 = 2/15.
Further, when the length L2 of the front through hole 9 is different from the length L1 of the rear through hole 10, the lower limit of the thickness L3 of the link 2 is a value that makes the ratio of the thickness L3 of the link 2 to smaller one of the length L1 and L2 be 2/15. On the other hand, the upper limit of the thickness L3 of the link 2 is a value that makes the ratio of the thickness L3 of the link 2 to larger one of the length L1 and L2 be 5/15.

Returning to FIGS. 2 and 3, the thickness L3 of the link 2 is set to satisfy the following conditions as well. The ratio L3/L4 of the thickness L3 to the length L4 between the contact center points C in the pair of contact regions 24 of the first pin 3 in the chain width direction L4 (hereafter, distance between the contact center points 24) is in the range of 1/30 to 3/30.

The thickness of the link 2 can be sufficiently ensured by setting 1/30 or more to the ratio L3/L4 of the thickness L3 of the link 2 to the distance L4 between the contact center points C, and plane strain state is substantially applied to stress field in the link 2 created when the chain 1 is driven accordingly.
Further, when the ratio L3/L4 of the thickness L3 of the link 2 to the distance L4 between the contact center points C is 3/30 or less, it is possible to maintain the thickness of the link 2 not too much, and prevent restriction on the flexibility in arranging of the link 2.

As for the present embodiment, the distance L4 between the contact center points C of the first pin 3 is 24 mm, the thickness L3 of the link 2 is 0.8 mm. Accordingly, the ratio L3/L4 = 0.8/24 = 1/30.
The thickness L3 of the link 2 is given such that stress created in the link 2 when tension is applied to the link 2 from the connecting member 200 does not exceed its fatigue limit.

The links 2 are disposed at a distance not exceeding 7/8 of the distance L4 between a pair of contact center points C of the first pin 3 in the chain width direction W. In detail, a first row of link 51 includes eight links 2, a second row of link 52 also includes eight links 2, and a third row of link 53 includes nine links 2. Accordingly, eight-eight-nine links 2 are repeatedly arranged in the chain-running direction W.

According to the present embodiment, the total L5 of the thickness L3 of the links 2 in the chain width direction W is obtained by multiplying the total of the number of the links 2 in the first to third rows 51 to 53 by the thickness L3 of the link 2, i.e. (8+8+9)×0.8 = 20 mm. Two adjacent links 2 are close almost without a space in the chain width direction W.
The ratio L5/L4 of the total L5 of the thickness L3 of the links 2 to the distance L4 between a pair of contact center points C of the first pin 3 is 20/24 <21/24 (= 7/8). As the ratio L5/L4 of the total L5 of the thickness L3 of the links 2 to the distance L4 between a pair of contact center points C of the first pin 3 exceeds 7/8, the links 2 approach too close to the contact center points. Therefore, the upper limit of the ratio L5/L4 is set to as 7/8, because the links 2 may contact to the sheave surface 62a, 63a, 72a, and 73a of the pulleys 60 and 70.

The links 2 in the first to third rows 51 to 53 are symmetrically disposed about the virtual plane B passing the center of the chain 1 in the chain width direction W and perpendicular to the chain width direction W.
The links 2 in the first row 51 are positioned at the third, fifth, ninth, and eleventh from the plane B in the chain width direction W. The links 2 in the second row 52 are positioned at the second, sixth, eighth, and twelfth from the plane B in the chain width direction W. The links 2 in the third row 53 are positioned at the first, fourth, seventh, tenth, and thirteenth from the plane B in the chain width direction W. The link 2 that is closest to the plane B, that is, at the center of the third row 53 in the chain width direction W crosses the plane B.

As described above, according to the present embodiment, the following effects can be achieved. While the chain 1 is driven, force corresponding to hydrostatic pressure, which does not contribute to the plastic deformation of the links 2 in force acting in the links 2, can be increased by substantially applying plane strain state to the stress field in the links 2. As a result, it is possible to decrease the force contributing to the plastic deformation of the links 2, such as Tresca stress or Mises stress. Accordingly, load applied to the links 2 can be substantially reduced and torque transmission capacity of the link 2 can be improved, so that improved durability and allowable transmission torque can be achieved in the chain 1.

When the ratio L3/L2 of the thickness L3 of the link 2 to the length L2 of the front hole 9 of the link 2 (length L1 of the rear through hole 10) in the perpendicular direction V is 2/15 or more, the thickness of the link 2 can be sufficiently ensured. As a result, plane strain state can be applied to the stress field of the link 2 that is created while the chain 1 is driven. On the other hand, when the above-mentioned ratio L2/L3 is 5/15 or less, it is possible to prevent the link 2 from thickening too much, thus preventing restriction on flexibility in arranging the links 2.

Further, when 1/30 or more is given to the ratio L3/L4 of the thickness L3 of the link 2 to the distance L4 between a pair of contact center points C of the first pin 3, the thickness of the link 2 can be sufficiently ensured. As a result, plane strain state can be applied to the stress field in the link 2 that is created while the chain 1 is driven. On the other hand, when the above-mentioned ratio L3/L4 is 3/30 or less, it is possible to prevent the link 2 from thickening too much, thus preventing restriction on flexibility in arranging the links 2.

While a first pin 3 is loosely inserted into the front through hole 9, a corresponding second pin 4 is press-fitted into the front through hole 9. Further, while the first pin 3 is press-fitted into the rear through hole 10, the second pin 4 is loosely inserted into the rear through hole 10.
A pair of engaging regions 24 of the first pin 3 is engaged with corresponding pulleys 60 and 70, and as adjacent links 2 bend in the chain-running direction X, a corresponding second pin 4 rolls to come in sliding contact with the first pin 3 and the links 2 can bend. Between the first and second pins 3 and 4, rolling-sliding contact components are large and sliding components is little, so that the engaging regions 24 of the first pin 3 is in contact with the pulleys 60 and 70, not rotating, thus a friction loss is reduced and high power transmission efficiency can be achieved.

Although stress is tend to increase in the portions 27a and 27b engaging with the second pin 4 in the periphery 25 of the front through hole 9 and the portions 29a and 29b engaging with the first pin 3 in the periphery 28 of the rear through hole 10 due to force directly applied through corresponding first and second pins 3 and 4, the links 2 are designed such that their stress is reduced, so that stress created in the portions 27a, 27b, 29a, and 29b can be reduced.

The trajectory of the contact point T with respect to the first pin 3 constructs an involute curve, seen from the chain width direction W. Accordingly, as the first pins 3 are sequentially engaged with the pulleys 60 and 70, adverse motions, such as string vibration, in the chain 1 can be prevented. As a result, noise in driving the chain 1 is more reduced.
As described above, it is possible to achieve a continuously variable transmission 100 that is silent in operation and has high allowance transmission torque, high power transmission efficiency, and durability.

Further, as for the present embodiment, it may satisfy any one of the conditions that the ratio L3/L2 (L3/L1) of the thickness L3 of the link 2 to the length L2 of the front through hole 9 (the length L1 of the rear through hole 10) is in the range of 2/15 to 5/15 and that the ratio L3/L4 of the thickness L3 of the link 2 to the distance L4 between a pair of contact center points C of the first pin 3 is in the range of 1/30 to 3/30.

The second pins 4 may be engaged with the pulleys 60 and 70. The second pins 4 may be loosely inserted in the front through holes 9 and the first pins 3 may be loosely inserted in the rear through holes 10.
Further, the invention may be applied to a block-typed power transmission chain in which a member that is disposed around each end of a first pin and has power transmission parts having the same cross section as the first pin and members having the first pin and functions as a power transmission block.

The positions of the front through hole 9 and the rear through hole 10 of the link 2 may be changed. A communication hole (slit) may be formed at the pillar section 8 between the front end rear through holes 9 and 10 of the link 2. As for the above-mentioned configuration, the amount of elastic deformation of the link 2 (flexibility) can be increased and stress in the link 2 can be reduced.
Further, the invention is not limited to the embodiment that changes the groove width of the drive pulley 60 and the driven pulley 70, and any one of the groove width may be changed and the other is not, but fixed. Although an embodiment where groove width is continuously (steplessly) changed is described above, the invention may be applied to other power transmission in which groove width is changed in step or fixed (non-stepless).

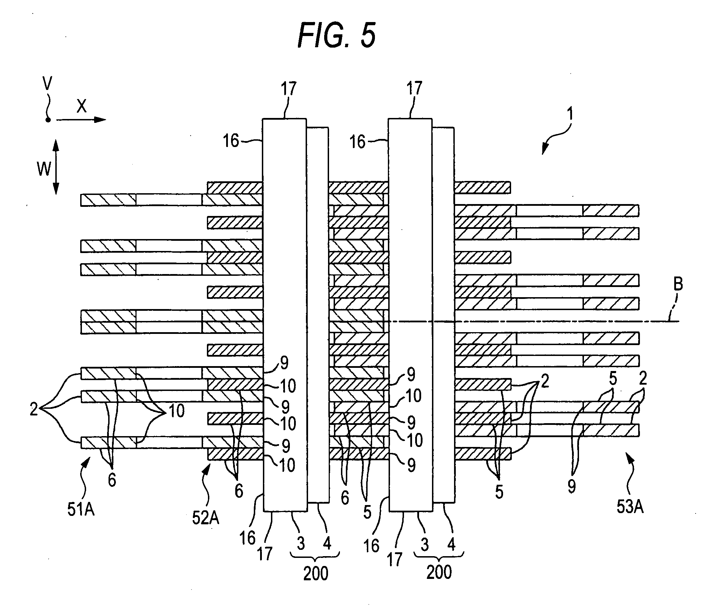

FIG. 5 is a cross-sectional view of main parts according to another embodiment of the invention. Differences from the embodiment involved in FIGS. 1 to 4 will be mainly described hereafter, and the same reference numerals are designated to the same components to avoid repetitive description.
Referring to FIG. 5, a point to intend to characterize the invention through the present embodiment is that first to third rows of links 51A to 53A include eight links 2, respectively. In other words, eight-eight-eight links 2 in the chain-running direction X are repeatedly arranged.

The links 2 in the first row 51A are positioned at the first, fifth, seventh, and eleventh from the plane B in the chain width direction W. The links 2 in the second row 52A are positioned at the third, sixth, ninth, and twelfth from the plane B in the chain width direction W. The links 2 in the third row 53A are disposed at the second, fourth, eighth, and tenth from the plane B in the chain width direction W. The link 2 that is closest to the plane B, that is, at the center of the first row 51A in the chain width direction W does not cross the plane B.

According to the present embodiment, the following effects can be achieved. Because the numbers of links 2 in the rows 51A to 53A are the same, stress in the links 2 in the rows 51A to 53A is substantially uniform and it is possible to prevent deflection in stress in the rows 51A to 53A accordingly. As a result, allowable transmission torque and durability can be improved. In addition, because the numbers of links in the rows 51A to 53A are the same, any link 2 in a certain row of link 2 does not protrude in the chain width direction W, which allows a small-sized chain.

Further, as for the present embodiment, seven links 2 may be provided in each of the links 51A to 53A. In the above-mentioned configuration, the thickness of each link 2 may be, for example, 1.0 mm and the ratio of the thickness L3 of the link 2 to the length L2 of the front through hole 9 of the link 2, L3/L2 = 1.0/6.0 = 2.5/15 and it is given in the range of 2/15 to 5/15.
In the above configuration, the ratio of the thickness L3 of the link 2 to the distance L4 between a pair of contact center points C of the first pin 3, L3/14 = 1.0/24.0 = 1.25/30 and it is given in the range of 1/30 to 3/30.

In addition, in the above configuration, seven-seven-seven links 2 are repeatedly arranged in the chain-running direction X. The total L5 of the thickness of links 2 in the chain width direction W is obtained by multiplying the total number of links 2 in the first to third rows 51A to 53 by the thickness L3, that is, (7+7+7)x 1.0 = 21 mm.
Further, the ratio of the total L5 of the thickness L3 of links 2 to the distance L4 between a pair of contact center points C of the first pin 3, L5/L4 = 21/24 = 7/8.

Alternatively, six links 2 may be provided in each of the rows 51A to 53A. In this configuration, the thickness of each link 2 may be, for example, 1.1 mm and the ratio of the thickness L3 of the link 2 to the length L2 of the front through hole 9 of the link 2, L3/L2 = 1-1/6.0 = 2.75/7.5 and it given in the range of 2/15 to 5/15.
In the above configuration, the ratio of the thickness L3 of the link 2 to the distance L4 between a pair of contact center points C of the first pin 3, L3/14 = 1.1/24.0 ≅ 1.38/30 and it is given in the range of 1/30 to 3/30.

In addition, in the above configuration, six-six-six links 2 are repeatedly arranged in the chain-running direction X. The total L5 of the thickness L3 of links 2 in the chain width direction W is obtained by multiplying the total number of links 2 in the first to third rows 51A to 53 by the thickness L3, that is, (6+6+6) × 1.1 = 19.8 mm.
Further, the ratio of the total L5 of the thickness L3 of links 2 to the distance L4 between a pair of contact center points C of the first pin 3, L5/L4 = 19.8/24<21/24 (= 7/8) .

Alternatively, four links 2 may be provided in each of the rows 51A to 53A. In this configuration, the thickness of each link 2 may be, for example, 1.6 mm and the ratio of the thickness L3 of the link 2 to the length L2 of the front through hole 9 of the link 2, L3/L2 = 1.6/6.0 = 4/15 and it is set to be in the range of 2/15 to 5/15. In the above configuration, the ratio of the thickness L3 of the link 2 to the distance L4 between a pair of contact center points C of the first pin 3, L3/L4 = 1.6/24.0 = 2/30 and it is given in the range of 1/30 to 3/30.

In addition, in the above configuration, four-four-four links 2 are repeatedly arranged in the chain-running direction X. The total L5 of the thickness L3 of links 2 in the chain width direction W is obtained by multiplying the total number of links 2 in the first to third rows 51A to 53 by the thickness L3, that is, (4+4+4)× 1.6 = 19.2 mm.
Further, the ratio of the total L5 of the thickness L3 of links 2 to the distance L4 between a pair of contact center points C of the first pin 3, L5/L4 = 19.2/24<21/24 (= 7/8).

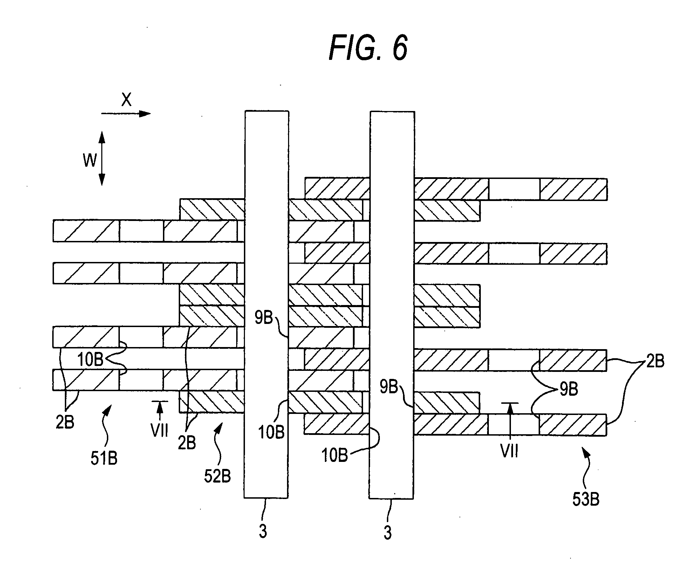

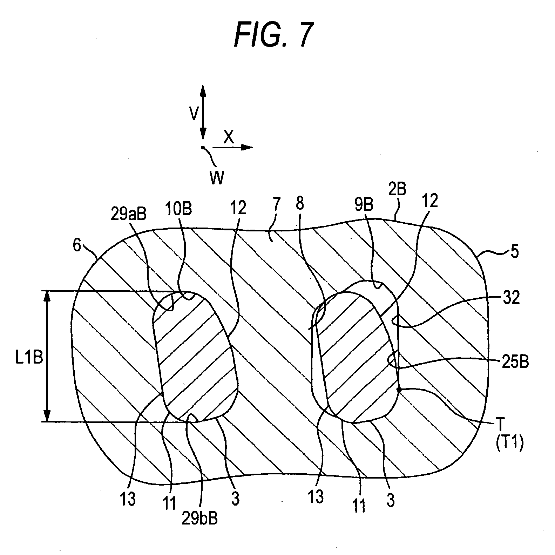

FIG. 6 is a cross-sectional view of main parts according to another embodiment of the invention. FIG. 7 is a cross-sectional view taken along the line VII-VII of FIG. 6. Referring to FIGS. 6 and 7, a point to intend to characterize the invention through the present embodiment is that links 2B in the chain running direction X are relatively rotatably (bendably) connected in the chain-running direction X by a connecting member of one (single) first pin 3. In detail, the first pin 3 is loosely inserted in a front through hole 9B of each link 2B and a corresponding first pin 3 is press-fitted (fitted) in a rear through hole 10B of the link 2B.

The front 32 (facing portion) of the periphery 25B of the front through hole 9B in the chain-running direction X has a cross section that is long in the perpendicular direction V. The front 23 rolls to come in sliding contact with the front 12 of the first pin 3 loosely inserted in the front through hole 9B at the contact point T.
Accordingly, as the links 2B bend, the links 2B and corresponding first pins 3 loosely inserted in the link 2B rolls to come in sliding contact with each other.

As for the present embodiment, the length of through hole of the link 2B implies the length L1B between an end 29aB and the other end 29bB of the rear through hole 10 of the link 2B in the perpendicular direction V.
According to the embodiment, the number of the first pins 3 to engage with each pulley at one time can be increased by reducing connection pitch between the first pins 3. Therefore, because impact force of the first pins 3 to each pulley can be reduced by reducing load that is applied to one first pin 3, it is possible to improve allowable transmission torque and durability and reduce noise.

In the above embodiment, the first pin 3 may be loosely inserted in the rear through hole 10B.
Although, preferred embodiments of the invention are described above, the invention is not limited thereto and may be modified in a various ways with the aspect described in claims.

### Examples

The inventor(s) has manufactured a comparative sample and exemplary samples 1, 2, and 3 for links where first and second pins are respectively inserted as shown in FIG. 3. In the comparative sample and exemplary samples 1, 2, and 3, each length of front through holes (rear through holes) of links in the perpendicular direction is set to 6.0 mm.
As for the comparative sample, the thickness of the link is 0.4 mm and the ratio of the thickness (0.4 mm) of the link to the length (6.0 mm) of the through hole of the link is 0.4/6.0 = 1/15.

For the sample 1, the thickness of the link is 0.8 mm and the ratio of thickness (0,8 mm) of the link to the length (6.0 mm) of the through hole of the link is 0.8/6.0 = 2/15.
For the sample 2, the thickness of the link is 1.0 mm and the ratio of the thickness (1.0 mm) of the link to the length (6.0 mm) of the through hole of the link is 1.0/6.0 = 2.5/15.
For the sample 3, the thickness of the link is 1.6 mm and the ratio of the thickness (1.6 mm) of the link to the length (6.0 mm) of the through hole of the link is 1.6/6.0 = 4/15.

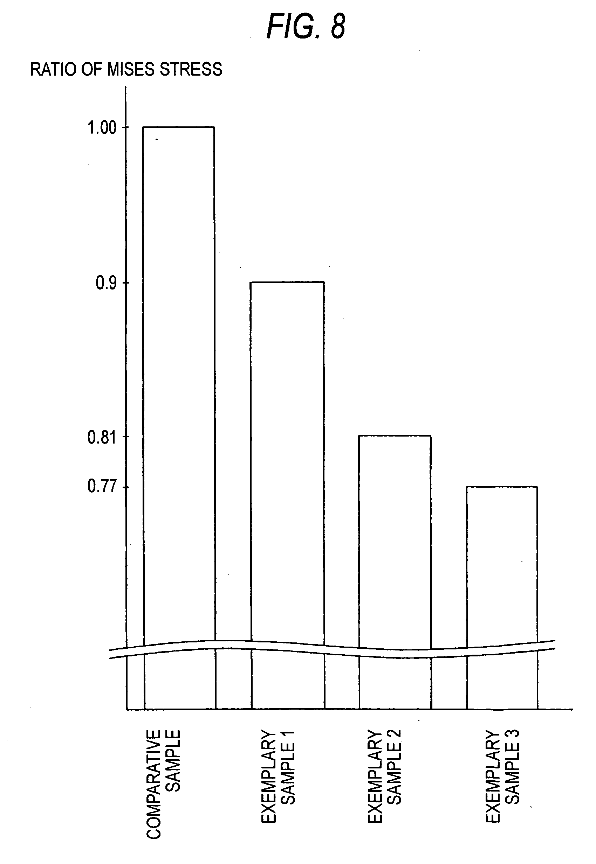

A tension test was applied to the comparative sample and exemplary samples 1, 2, and 3. In detail, a connecting member is inserted in the front and rear through holes and load is repeatedly applied in the change running direction through the connecting members, in which the maximum Mises stress is measured and shown in FIG. 8.
As shown in FIG. 8, the maximum Mises stress for the sample 1 was not more than 90% of that for the comparative sample. Similarly, the maximum Mises stress for the sample 2 was not more than 81% of that for the comparative sample. The maximum Mises stress for the sample 3 was not more than 77% of that for the comparative sample.

For the samples 1, 2, and 3, it can be seen from the above that Mises stress when load is applied is small and improved durability and large torque transmission capacity is obtained. In particular, the larger the thickness of links, the remarkable the effect is.

## Claims

1. A power transmission chain comprising:
a plurality of links arranged in a chain-running direction; and
a plurality of connecting members extending in the chain width direction and connecting the links,
wherein a substantial plane strain state is applied to stress field in the links that is created when the chain looped around pulleys is driven.

2. The power transmission chain according to claim 1, wherein
the link has through holes to insert the connecting members, and
a ratio of thickness of the link in a chain width direction to a length of the through hole in a direction perpendicular to the chain-running direction and the chain width direction is set in a range of 2/15 to 5/15.

3. The power transmission chain according to claim 1, wherein
the connecting member includes a power transmission member having a pair of engaging regions that engages with the pulleys to transmit power at opposite ends of the connecting member in the chain width direction, and
a ratio of thickness of the link to a distance between center points of the pair of engaging regions is set in the range of 1/30 to 3/30.

4. The power transmission chain according to claim 1, wherein
the link includes a first through hole and a second through hole which are disposed in a line in the chain-running direction and through the connecting members are respectively inserted,
the connecting member includes a first power transmission member that is engaged with the pulleys to transmit power and a second power transmission member that rolls to come in sliding contact with the first power transmission member,
the first power transmission member is inserted in the first through hole such that the first power transmission member can move relatively to the through hole and the second power transmission member is inserted in the first through hole such that the second power transmission member can not move relative to the through hole, and
the first power transmission member is inserted in the second through hole such that the first power transmission member cannot move relatively to the through hole and the second power transmission member is inserted in the second through hole such that the second power transmission member can move relative to the through hole.

5. A power transmission comprising:
first and second pulleys respectively having a pair of conical sheave surfaces facing each other, and
the power transmission chain according to any one of claims 1 to 4 that is looped around the pulleys and engaged with the sheave surfaces to transmit power.
